# DEMANDE DE BREVET EUROPEEN

(11) **EP 0 890 935 A1**
(43) Date de publication de la demande: **13.01.1999**
(21) Numéro de dépôt: 98401740.0
(22) Date de dépôt: 09.07.1998
(51) Int. Cl.: G08G 1/0968, G01C 21/20

(54) **Procédé de guidage d'un véhicule sur le réseau routier**

(30) Priorité: 11.07.1997 FR 9708844
(71) Demandeur: RENAULT, 92109 Boulogne-Billancourt (FR)
(72) Inventeur: Moussa, Ralph, 75016 Paris (FR)

(57) **Abrégé**

Procédé de guidage d'un véhicule sur le réseau routier reposant sur la détermination de la position instantanée du véhicule, sur l'exploitation d'un ensemble de données embarquées distinguant un réseau routier principal d'un réseau routier secondaire en vue d'optimiser un itinéraire permettant d'atteindre une destination choisie dans des listes d'adresses, et sur l'indication en temps réel de messages à suivre pour respecter cet itinéraire, caractérisé en ce que l'optimisation de l'itinéraire prend en compte simultanément le déplacement du véhicule sur les voies du réseau principal et son déplacement sur celles du réseau secondaire, et en ce que le guidage repose sur la signalisation directionnelle implantée sur le réseau principal et se limite à des indications de cap et de distance à vol d'oiseau en dehors de celui-ci.

## Description

La présente invention se rapporte au domaine technique de l'aide à la navigation des véhicules routiers. Plus précisément, elle concerne un procédé de guidage d'un véhicule sur le réseau routier, reposant sur la détermination de la position instantanée du véhicule, sur l'exploitation d'un ensemble de données embarquées distinguant un réseau routier principal d'un réseau routier secondaire, sur le choix d'une destination choisie dans une liste d'adresses, et sur l'indication en temps réel de messages à suivre pour respecter un itinéraire calculé.

Selon l'état de la technique connue, les systèmes de guidage ou d'aide à la navigation sont capables de saisir une destination, d'effectuer un calcul d'itinéraire, et de donner des indications de guidage à certains carrefours, jusqu'à la destination choisie.

Dans de nombreux dispositifs de guidage proposés, le trajet calculé est affiché sur un fond de carte orientable, et le calcul d'un nouveau trajet intervient automatiquement, dès que que le système détecte que le véhicule a été dérouté de l'itinéraire initialement indiqué.

Dans certains systèmes connus, l'itinéraire est établi à partir d'informations extérieures au véhicule, transmises par exemple par une infrastructure située en bord de voie, ou par un réseau de radiotéléphone. Lorsqu'au contraire, le calcul ou 〈〈optimisation〉〉 de l'itinéraire, est effectué à bord du véhicule en exploitant uniquement des données stockées sur un support embarqué, tel qu'un CDROM, ou une carte à mémoire, les systèmes de guidage sont parfaitement autonomes. Le coût des systèmes dépend alors essentiellement des bases de données utilisées (interviennent en particulier l'étendue et la variété des secteurs concernés, ainsi que la précision des informations sélectionnées), de la rapidité des calculs effectués, et de la qualité du guidage.

L'optimisation d'un système de guidage 〈〈autonome〉〉 suppose que la base de données utilisée soit structurée en fonction de la nature des informations stockées, de leur volume, et de la définition des prestations attendues.

Par la publication WO 93/03452, on connait un système de guidage embarqué, dont la base de données est structurée en plusieurs couches, en vue de simplifier la description des axes principaux pour réduire les temps de calcul d'itinéraire. Selon ce document, la base est constituée en ajoutant à des couches de données décrivant le réseau routier de façon détaillée, des couches supplémentaires décrivant de façon simplifiée certains axes. Le système décrit dans cette publication, choisit dans la base une couche de données en fonction de la distance à couvrir entre le point de départ et la destination, avant de calculer l'itinéraire.

Ces dispositions visent notamment à augmenter la rapidité des calculs en adaptant ces derniers à la distance prévue. Cependant, la présence simultanée de différents niveaux de description du réseau routier entraîne obligatoirement une augmentation de la taille mémoire des supports de données. Les mesures proposées par la publication WO 93/03452 sont donc incompatibles avec un objectif de réduction des capacités de mémoire utilisées.

Enfin, ces mesures concernent uniquement la phase de calcul de l'itinéraire, puisque l'itinéraire indiqué au conducteur apparaît de façon classique sous forme d'une succession de tronçons, et que la seule utilisation de leur représentation géométrique pour effectuer le guidage pénalise la qualité de celui-ci.

La présente invention a pour objectif de remédier aux inconvénients d'un système de guidage autonome de type connu.

Elle propose notamment de réduire la capacité de mémoire nécessaire à l'obtention d'un guidage fin jusqu'à toutes les destinations recherchées, indépendamment de la distance à parcourir.

Dans ce but, l'optimisation de l'itinéraire prend en compte simultanément le déplacement du véhicule sur les voies du réseau principal et son déplacement sur celles du réseau secondaire.

Conformément à l'invention, le guidage repose sur la signalisation directionnelle implantée sur le réseau principal, et se limite à des indications de cap et de distance à vol d'oiseau en dehors de celui-ci.

Cette mesure n'exclut cependant pas que le guidage par signalisation directionnelle coexiste avec un guidage rue par rue, sur le réseau principal.

De préférence, ce guidage comporte une première phase, du point de départ jusqu'au réseau principal, une deuxième phase sur celui-ci, et une troisième phase, du réseau principal jusqu'à la destination.

Conformément à l'invention, les destinations sont normalement choisies dans une liste d'adresses, dont les coordonnées sont identifiées sur le tronçon routier correspondant.

La détermination des points d'entrée et de sortie du réseau principal repose préférentiellement sur des critères de proximité, mais prend en considération si nécessaire une estimation des vitesses moyennes sur le réseau principal et sur le réseau secondaire.

D'autres caractéristiques et avantages de l'invention apparaîtront clairement à la lecture de la description suivante d'un mode de réalisation particulier de celle-ci, en liaison avec les dessins annexés sur lesquels :
- la figure 1 regroupe sous forme de blocs fonctionnels les différents éléments constitutifs d'un dispositif de guidage permettant de mettre en oeuvre l'invention, et
- les figures 2A à 2E illustrent le guidage proposé.

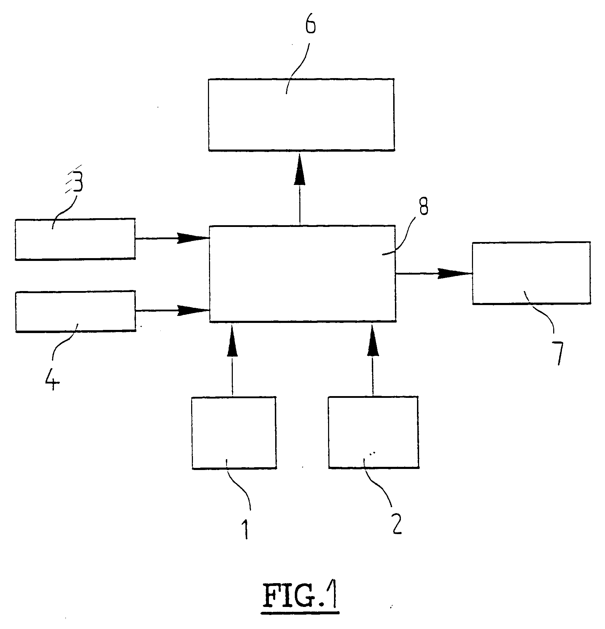

Le dispositif de la figure 1 comporte un module de localisation 1, un support de mémoire 2 contenant des bases de données, un ou plusieurs dispositifs de commande 3, 4, permettant de programmmer ou de choisir une destination dans une liste d'adresses, ainsi qu'un module de restitution d'informations visuelles 6 et un module de restitution sonore d'informations 7, tel qu'un module de synthèse de la parole.

Le module de localisation 1 est par exemple un système de radiolocalisation absolue par satellites ou par balises au sol, d'une précision d'environ 100 mètres, couplé de préférence à des capteurs d'estime permettant de suivre et de recaler en permanence la localisation du véhicule selon des méthodes connues, lorsque les signaux de radiolocalisation ne sont pas reçus.

Le support de mémoire 2 contenant les bases de données géographiques et routières exploitées par le dispositif, peut être de tout type, mais la faible quantité d'informations nécessaires, permet de se contenter d'une simple carte à mémoire, dont la capacité est suffisante pour contenir une liste d'adresses, des données relatives à un réseau de circulation simplifié, et un vocabulaire de synthèse de parole à faible débit.

De préférence, la partie de la base de données dédiée à la programmation de la destination comporte des données 〈〈sites〉〉 et des données 〈〈adresses〉〉. Les données 〈〈sites〉〉 incluent la localisation de différents sites, tels que des hotels, des hopitaux, des stations-service, etc..., accompagnée dans certains cas d'informations pratiques, heures d'ouverture, numéros de téléphone, etc.... Les données 〈〈adresses〉〉 incluent des listes de rues, elles-mêmes décomposées en tronçons, leurs orientations, les types de voie rencontrés, les sens de circulation, les coordonnées des extémités des rues ou des tronçons, et les numéros de rues. Enfin, il est possible de 〈〈comprimer〉〉 les 〈〈données adresses〉〉, par exemple ville par ville, en les développant uniquement lorsqu'elles sont sollicitées.

Conformément à l'invention, on opère dans la base une distinction entre une partie du réseau routier correspondant aux axes principaux, qualifiée de 〈〈réseau principal〉〉, et le reste du réseau, qualifié de 〈〈réseau secondaire〉〉. La base utilisée contient à cet effet une zone particulière, dédiée aux principaux axes de circulation. Ces axes sont décrits par des attributs alphanumériques permettant notamment de connaître leurs longueurs, leurs noms, leur signalisation directionnelle, ainsi que les coordonnées de leurs carrefours, et le nom de ces carrefours.

Les dispositifs de commande 3, 4, permettent d'indiquer la destination choisie, en sélectionnant celle-ci dans la liste d'adresses mentionnée ci-dessus, mais également de choisir des critères de calcul d'itinéraire, tels que le chemin le plus direct, l'utilisation privilégiée de certains axes, ou la recherche de services (hopitaux, restaurants, stations-service, etc...). Ces dispositifs de commande peuvent être constitués de touches en face avant d'un boîtier, mais également d'un satellite déporté sous volant, ou encore d'une télécommande infrarouge, facilitant l'accès des passagers du véhicule aux commandes.

L'afficheur 6 mentionné sur la figure est un afficheur de type quelconque, pouvant se limiter par exemple à un afficheur matriciel monochrome de faible résolution, en raison de la simplicité graphique des indications affichées.

L'unité de calcul 8, reliée aux autres éléments du dispositif, gère notamment, l'ensemble des entrées et des sorties de celui-ci, le calcul des itinéraires, la progression du véhicule par rapport à l'itinéraire calculé, la sélection de modes de guidage particuliers, tel qu'un guidage 〈〈à la boussole〉〉 ou 〈〈à vol d'oiseau〉〉 et/ou un guidage s'appuyant sur la signalisation directionnelle présente le long de l'itinéraire.

Le procédé de guidage proposé repose sur la détermination de la position instantanée du véhicule, sur l'exploitation des données embarquées en vue d'optimiser un itinéraire permettant d'atteindre une destination choisie dans les listes d'adresses stockées en mémoire, et sur l'indication en temps réel, de messages à suivre pour respecter cet itinéraire.

La distinction entre un réseau routier principal, et un réseau routier secondaire au sein de la base de données embarquée permet de prendre en compte simultanément le déplacement du véhicule sur les voies du réseau principal et son déplacement sur celles du réseau secondaire dans le calcul de l'itinéraire et dans le guidage, sans pour autant disposer dans la base, de données précises sur l'ensemble du réseau.

Comme réseau principal, on peut par exemple adopter l'ensemble des autoroutes, des routes nationales ou départementales, des boulevards et des routes à grande circulation dotées d'une signalisation directionnelle. Le réseau secondaire sera alors limité à un niveau de desserte locale, incluant les rues de villes, les petits axes et les voies départementales à faible circulation, habituellement non dotées de signalisation directionnelle.

Grâce à une décomposition de l'itinéraire en un premier déplacement correspondant à l'accès au réseau principal, un second déplacement sur le réseau principal lui même, et un troisième déplacement entre le réseau principal et la destination, il est possible de distinguer les phases de guidage correspondantes, et de limiter par exemple le guidage sur le réseau secondaire à une indication de cap et de distance à vol d'oiseau. Cette mesure permet de remplacer pour le réseau secondaire les éléments descriptifs des voies et des carrefours, par la liste d'adresses mentionnée ci-dessus, et de réduire ainsi considérablement le volume des données stockées dans la base. Dans ces conditions, le guidage peut reposer sur la signalisation directionnelle implantée sur le réseau principal, en se limitant, hors de celui-ci, à des indications de cap et de distance à vol d'oiseau.

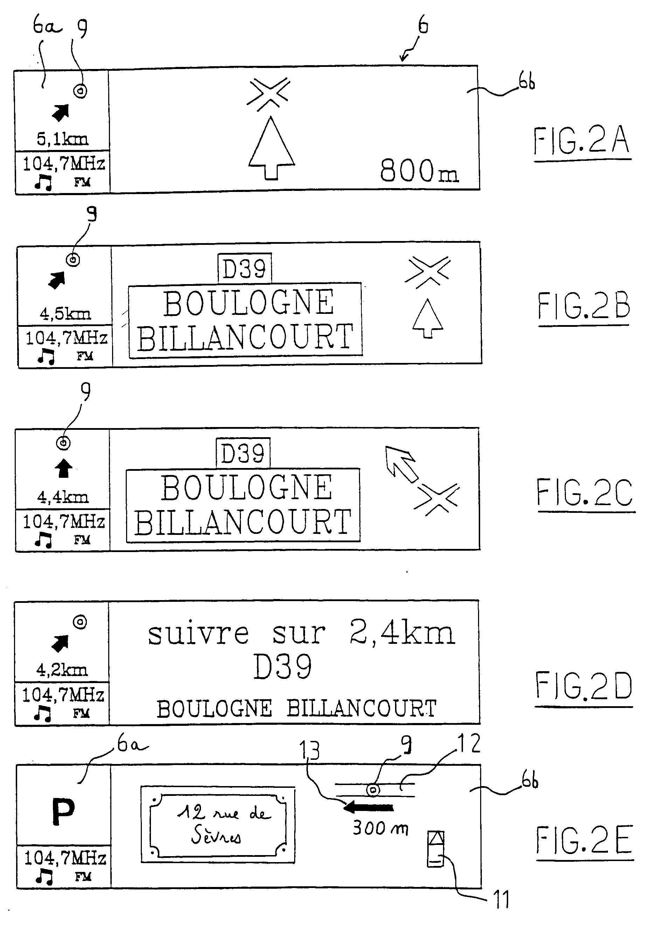

Les itinéraires calculés sont donc constitués d'une succession de carrefours ou 〈〈noeuds routiers〉〉, dont le premier est choisi à proximité du point de départ, et le dernier à proximité du point d'arrivée. Les figures 2A à 2E illustrent de façon non limitative le type de guidage qui peut être assuré par l'invention. Sur ces quatre schémas, on voit que l'écran peut être partagé entre une première zone 6a, dédiée à l'affichage de l'orientation relative 9 de la destination par rapport à la direction de déplacement du véhicule et de la distance restante à parcourir, et une seconde 6b, zone dédiée à des indications plus précises, en rapport avec le suivi immédiat de l'itinéraire calculé. Le conducteur est ainsi guidé jusqu'au premier carrefour du réseau principal par l'indication sur la seconde zone 6b de l'afficheur (et/ou régulièrement par des messages vocaux), du cap à suivre pour rejoindre celui-ci (cf figure 2A). Avant l'arrivée à ce premier carrefour (cf figure 2B), le conducteur est informé de la direction à prendre en sortant de celui-ci en se référant à la signalisation directionnelle. Lorsqu'il sort du carrefour (cf figure 2C), la signalisation directionnelle à respecter est toujours affichée, et le conducteur bénéficie de l'indication du cap de l'axe correspondant (sortie de rond-point, bretelle d'entrée de voie rapide,etc..). Enfin, entre deux carrefours du réseau principal (cf figure 2D), la seconde zone 6b peut se contenter d'indiquer la route à suivre (D39), et la distance à suivre sur le tronçon correspondant.

Ce mode de guidage peut être conservé tout le long du déplacement sur le réseau principal, c'est-à-dire tant que le véhicule se déplace entre deux carrefours de celui-ci. En sortant du dernier carrefour du réseau principal, le conducteur retrouvera un guidage de cap, accompagné d'une indication de distance restante à parcourir.

La figure 2E illustre de façon non limitative le guidage final sur le réseau secondaire. Dans la zone 6a de l'afficheur, le symbole 〈〈P〉〉 indique que le système connaît des parkings à proximité du véhicule, ces parkings pouvant éventuellement être adoptés comme destination. Dans la zone 6b apparaissent un rappel de l'adresse un symbole 〈〈véhicule〉〉 11 indiquant toujours la direction de déplacement du véhicule, un symbole 〈〈rue〉〉 12, indiquant l'orientation de la rue de destination (perpendiculaire au sens de déplacement du véhicule dans le cas présent), le sens de circulation 13 de cette rue si elle est à sens unique, la distance à vol d'oiseau (300 mètres) de la destination, et le symbole de destination 9 précisant la disposition relative de celle-ci par rapport au véhicule (en avant vers la gauche).

L'utilisation du 〈〈guidage à vol d'oiseau〉〉 sur le réseau secondaire, permet de supprimer les données relatives à ce réseau dans la base de données. Toutefois, il conduit à rajouter dans celle-ci les adresses, ainsi que des informations sur les rues, telles que les numéros des adresses, et des indications relatives aux restrictions de circulation.

Le guidage sur les grands axes nécessite pour sa part d'introduire dans la base leur nomenclature (〈〈N13〉〉, 〈〈Périphérique nord〉〉), la signalisation directionnelle présente sur le terrrain (〈〈Bordeaux〉〉, 〈〈Paris centre〉〉), et des consignes de cheminement particulières (〈〈prendre le tunnel〉〉, 〈〈éviter l'autopont〉〉, etc...).

Sans sortir du cadre de l'invention, la base peut toutefois contenir davantage de données sur les grands axes, en fonction de l'espace mémoire disponible sur son support. Dès lors, le guidage par panneaux et un guidage classique 〈〈rue par rue〉〉, du type 〈〈au prochain carrefour prendre à droite〉〉 peuvent coexister sur le réseau principal. Le guidage 〈〈rue par rue〉〉 est en effet très utile, mais uniquement pour les petits carrefours, à l'abord desquels le message ne présente pas d'ambiguité. En effet, pour des carrefours complexes, tels que des enchaînements de plusieurs carrefours élémentaires, des entrées ou des sorties de voies rapides, disposant d'une signalisation directionnelle, le guidage par panneaux est plus efficace. A ce sujet, on peut malgré tout considérer qu'en raison de la limation correspondante du volume des données stockées, l'optimisation du procédé de l'invention est atteinte en ne retenant pour le réseau principal que les données relatives à l'implantation géographique des axes principaux, à leur nomenclature, à leur signalisation directionnelle, et aux principales indications de cheminement mentionnées ci-dessus. Enfin, lorsque le guidage 〈〈par panneaux〉〉 et 〈〈rue par rue〉〉 coexistent, l'arbitrage entre ces derniers pourra être géré par une règle privilégiant l'un ou l'autre, selon les circonstances, par exemple en fonction de la complexité des situations rencontrées.

L'invention permet en particulier de remplacer dans une base de données classique le réseau routier secondaire par des listes d'adresses de destinations pourvues de leurs numéros de rue. Cette disposition est compatible avec une compression des adresses ville par ville dans la base de donnée, et leur décompression temporaire, lors de la programmation de la destination.

Le choix d'une destination dans une liste d'adresses et sa programmation dans le dispositif entraîne automatiquement l'identification du tronçon correspondant dans la base et la détermination des coordonnées de position de cette destination grâce au rapport entre le numéro de l'adresse dans la rue, et les numéros d'extrémité de ce tronçon. La détermination des points d'entrée et de sortie du réseau principal, dits points 〈〈d'accrochage〉〉 et de 〈〈décrochage〉〉 repose préférentiellement sur des critères de proximité, c'est à dire sur la recherche des points les plus proches de la position initiale du véhicule, et de la destination choisie. En variante, on peut cependant faire intervenir un critère de durée, en estimant les vitesses moyennes sur les deux réseaux.

Le guidage 〈〈à vol d'oiseau〉〉 ou 〈〈à la boussole〉〉 peut être complété par des informations portant sur la rue qui contient la destination, telles que son orientation, ou ses restrictions (notamment son sens) de circulation. Par ailleurs, il est particulièrement adapté à la recherche et au guidage vers des services, puisqu'il est possible d'enrichir la liste d'adresses de la base, de listes de services, par exemple des restaurants, en précisant les segments de' rue sur lesquels ils sont situés.

Selon un mode de réalisation particulier de l'invention, le guidage à 〈〈la boussole〉〉 vers une adresse peut être réalisé en deux temps, par exemple en indiquant dans un premier temps la direction de l'extrémité d'entrée du tronçon de rue contenant l'adresse, puis dans un deuxième temps, le cap du tronçon lui-même. Ce mode de guidage permet notamment de prendre en considération le sens de circulation sur le tronçon considéré. Toutefois, il privilégie une extrémité d'accès du tronçon par rapport à l'autre pendant tout le guidage, alors que le meilleur choix à ce sujet pourrait très bien évoluer au cours du déplacement du véhicule.

Concernant le guidage par signalisation directionnelle, on peut prévoir les dispositions suivantes, sans pour autant limiter la portée de l'invention. En premier lieu, il est avantageux de distinguer dans la base certains carrefours, dits 〈〈complexes〉〉, tels que des carrefours urbains présentant des entrées et des sorties vers des voies rapides, ou des rond-points présentant de nombreux embranchements. Sur un tel carrefour, l'invention prévoit en effet d'utiliser deux noms de direction correspondant à l'axe à emprunter, le nom de cet axe, et éventuellement l'indication d'une direction globale à respecter, exprimée de façon angulaire ou graphique par rapport à l'axe longitudinal du véhicule, et actualisée en permanence en fonction du cap du véhicule.

Cette disposition permet de limiter le nombre d'axes pouvant correspondre à la sortie du carrefour, dont le bon choix est confirmé par les panneaux existants. Sur certains échangeurs assimilés à des carrefours, ces dispositions n'excluent pas d'indiquer l'indication globale de direction uniquement après le passage des points décisifs. Enfin les indications de guidage sur les carrefours complexes peuvent utilement être complétées par des annonces préliminaires permettant d'assurer un prépositionnement correct du véhicule sur les voies de circulation, au cas où l'arrivée sur le carrefour se fait sur plusieurs files. A ce sujet, les messages de prépositionnement peuvent très bien être reportés tels quels dans la base de données, en créant des champs spéciaux à cet effet.

De préférence, les indications de guidage ne sont valables qu'aux carrefours, de sorte qu'elles ne sont plus affichées au delà des carrefours. De façon plus générale, le système n'indiquera que les informations les plus utiles, si possible, dès le prépositionnement éventuel du véhicule dans les files.

Selon une autre caractéristique de l'invention, le guidage sur le réseau principal est de type 〈〈non intrusif〉〉, et repose sur les principes suivants :
- une route est annoncée uniquement en cas de changement de route, et il n'y a pas d'annonce si seul le nom de la direction change, ou si plusieurs routes appartiennent aux yeux du conducteur à la même entité,
- sur une route donnée, la direction n'est indiquée qu'en cas de risque de confusion, et
- l'annonce de prépositionnement, effectuée si nécessaire, constitue une exception au principe du 〈〈guidage non intrusif〉〉.

Conformément à l'invention, l'utilisateur a la possibilité de demander une information vocale adaptée à sa situation, par exemple vis-à-vis des carrefours. Ainsi, aux abords d'un carrefour, cette information pourrait se limiter aux indications de guidage immédiatement nécessaires, alors qu'elle serait plus complète dans d'autres circonstances. Une première commande peut dans ce cas servir à demander strictement les indications nécessaires au franchissement des carrefours, et les directions courantes à suivre entre deux carrefours, tandis qu'une seconde commande permettra de demander de façon plus large les instructions à suivre sur la suite de l'itinéraire. L'utilisation des commandes sous-volant est particulièrement adaptée à ce type de distinction entre les informations souhaitées, notamment lorsque les conditions de conduite ne permettent pas de consuter l'afficheur graphique. Le procédé de guidage proposé laisse en outre à l'utilisateur la possibilité de configurer le système, afin qu'il ne délivre plus aucun message sonore : dans ce cas, seuls les messages affichés sont mis à jour automatiquement. Toutefois, en cas de besoin, l'utilisateur peut demander un message vocal, selon les modalités décrites ci-dessus.

L'invention prévoit également de gérer la continuité des signalisations directionnelles, de façon à garantir une relative stabilité dans le choix des indications transmises. Cette analyse peut s'effectuer en examinant dès le départ la fréquence des panneaux sur un itinéraire, de façon à priviligier les indications les plus fréquentes. Dans tous les cas, ces dernières seront annoncées le plus tôt possible sur l'itinéraire en privilégiant celles qui se trouvent jusqu'à la destination, de façon à accroître le confort du guidage.

Le procédé de guidage de l'invention est par ailleurs compatible avec la notion de trajet alternatif, proposé en réponse à l'annonce de certaines difficultés de circulation. Dans une telle situation, le système réservera notamment à l'utilisateur la faculté de visualiser la liste des axes correspondant au trajet initialement prévu, de sélectionner l'axe posant problème pour le déclarer 〈〈bloqué〉〉 et de demander le calcul d'un nouvel itinéraire. Certaines 〈〈alternatives〉〉, habituellement écartées en raison de mauvaises conditions de circulation, seront ainsi retenues dans le calcul d'itinéraire, si les axes normalement priviligiés sont bloqués. Dans tous les cas, le système observera cependant en permanence la position du véhicule par rapport à l'itinéraire, de manière à pouvoir proposer un nouvel itinéraire en cas déloignement de celui qui était initialement prévu.

Selon une autre disposition applicable, certaines connexions sont affectées, si nécessaire, d'une pénalité das les calculs d'itinéraires, par exemple en fonction de l'angle entre les voies entrantes ou sortantes, sans toutefois imposer ce paramètrage dans les carrefours où il est naturel de pouvoir s'engager dans toute voie sortante.

Enfin, il est souhaitable que l'utilisateur conserve la faculté de choisir entre différents axes routiers proposés, selon des critères personnels, ou en situation d'incertitude. Dans ce dernier cas, il pourra améliorer le guidage en précisant lui-même sa localisation, par exemple en validant l'axe sur lequel il se déplace effectivement, après l'avoir reconnu selon des critères extérieurs au système.

Les avantages du procédé de guidage proposé par l'invention sont nombreux. Parmi ceux-ci, on peut citer :
- une réduction de la capacité de mémoire nécessaire au stockage de la base de données,
- la réduction des temps de calcul d'itinéraire,
- la simplicité d'un format 〈〈adresses〉〉 de la base de données adapté à des listes de rues ou d'index électroniques,
- l'ouverture de ce format aux bases de données de services,
- la qualité du guidage obtenu,
- la compatibilité de ce procédé avec toutes les architectures connues, exploitant notamment de simples cartes à mémoire en lieu et place de disques laser de type CDROM, et
- sa compabitibilité avec des systèmes de guidage ne bénéficiant pas d'une localisation très précise, tels que ceux qui n'utilisent aucune technique de recalage sur carte.

## Revendications

1. Procédé de guidage d'un véhicule sur le réseau routier reposant sur la détermination de la position instantanée du véhicule, sur l'exploitation d'un ensemble de données embarquées distinguant un réseau routier principal d'un réseau routier secondaire en vue d'optimiser un itinéraire permettant d'atteindre une destination choisie dans des listes d'adresses, et sur l'indication en temps réel de messages à suivre pour respecter cet itinéraire, caractérisé en ce que l'optimisation de l'itinéraire prend en compte simultanément le déplacement du véhicule sur les voies du réseau principal et son déplacement sur celles du réseau secondaire, et en ce que le guidage repose sur la signalisation directionnelle implantée sur le réseau principal et se limite à des indications de cap et de distance à vol d'oiseau en dehors de celui-ci.

2. Procédé de guidage selon la revendication 1, caractérisé en ce qu'il comporte une phase de guidage du point de départ jusqu'au réseau principal, une phase de guidage sur celui-ci, et une phase de guidage du réseau principal jusqu'à la destination.

3. Procédé de guidage selon la revendication 1 ou 2, caractérisé en ce que le choix d'une destination dans une liste d'adresses permet d'identifier les coordonnées de celle-ci sur le tronçon routier correspondant.

4. Procédé de guidage selon la revendication 2 ou 3, caractérisé en ce que la détermination des points d'entrée et de sortie du réseau principal repose préférentiellement sur des critères de proximité.

5. Procédé de guidage selon la revendication 2, 3 ou 4, caractérisé en ce que la détermination des points d'entrée et de sortie du réseau principal prend en considération une estimation des vitesses moyennes sur les deux réseaux.

6. Procédé de guidage selon l'une des revendications précédentes, caractérisé en ce que le guidage à vol d'oiseau est complété par l'indication des restrictions de circulation de la rue contenant la destination, ainsi que l'orientation de cette rue.

7. Procédé de guidage selon l'une des revendications précédentes, caractérisé en ce que le cap indiqué pour rejoindre la destination est celui de l'entrée du tronçon correspondant avant d'être celui de la destination proprement-dite.

8. Procédé de guidage selon l'une des revendications précédentes, caractérisé en ce que le guidage reposant sur la signalisation directionnelle est accompagné d'une indication de cap en certains points complexes du réseau principal.

9. Procédé de guidage selon l'une des revendications précédentes, caractérisé en ce que la fréquence des différentes signalisations directionnelles présentes sur un itinéraire est prise en considération en vue de donner au conducteur le plus tôt possible des indications se retrouvant jusqu'à sa destination.

10. Procédé de guidage selon l'une des revendications précédentes, caractérisé en ce que les messages donnent des indications de positionnement dans les différentes files d'un axe de circulation.

11. Procédé de guidage selon l'une des revendications précédentes, caractérisé en ce que certaines connexions d'axes routiers sont pénalisantes dans le calcul d'itinéraire.

12. Procédé de guidage selon l'une des revendications précédentes, caractérisé en ce que le conducteur a la possibilité d'améliorer le guidage en précisant lui-même sa localisation.

13. Procédé de guidage selon l'une des revendications précédentes, caractérisé en ce que le guidage par signalisation directionnelle coexiste avec un guidage rue par rue sur le réseau principal.
